# FASCICULE DE BREVET EUROPEEN

(11) **EP 3 645 472 B1**
(45) Date de publication et mention de la délivrance du brevet: **07.05.2025**
(21) Numéro de dépôt: 18749009.9
(22) Date de dépôt: 26.06.2018
(51) Int. Cl.: C03B 23/023, C03B 23/03, C03B 27/04, C03B 27/044

(54) **BOMBAGE DE FEUILLES DE VERRE COMPRENANT UN REFROIDISSEMENT LOCALISE**
BIEGEN VON GLASSCHEIBEN MIT LOKALISIERTER KÜHLUNG
BENDING OF GLASS SHEETS COMPRISING LOCALISED COOLING

(30) Priorité: 29.06.2017 FR 1700693
(43) Date de publication de la demande: 06.05.2020
(73) Titulaire: SAINT-GOBAIN GLASS FRANCE, 92400 Courbevoie (FR)
(72) Inventeur: BURGAUD, David, 60310 Candor (FR); HENNION, Alexandre, 40-084 Katowice (PL); GOBIN, Jérôme, 60170 Saint Leger Aux Bois (FR)
(74) Mandataire: Saint-Gobain Recherche
(86) Numéro de dépôt international: PCT/FR2018/051558
(87) Numéro de publication internationale: WO 2019/002751

(56) Documents cités:
- BE-A- 723 484
- FR-A1- 2 828 880
- GB-A- 1 157 391
- US-A- 5 972 513
- US-A1- 2005 268 661
- US-A1- 2014 234 576

## Description

L'invention concerne le domaine des vitrages bombés, notamment automobile, comprenant des zones renforcées par des contraintes en compression.

La réalisation de zones renforcées par des contraintes en compression sur un vitrage peut-être rendue nécessaire pour certaines utilisations. Notamment, il est recommandé qu'un orifice dans un vitrage ait des contraintes de bord suffisamment élevées pour offrir une résistance suffisante, par exemple si un câble doit le traverser ou si une pièce doit être fixée autour de lui.

Les documents GB1157391 et BE7234484 enseignent une trempe différenciée du verre pour obtenir un comportement à la casse différent en zone centrale, sans envisager la découpe du verre. Le document US5972513 enseigne un verre feuilleté dont une feuille est durcie, sans envisager sa découpe. Comme autre documents on peut citer les US2005/0268661, FR2828880 et US2014/234576.

Un procédé de bombage de feuilles de verre par paire ne permet pas toujours d'atteindre toutes les performances produits nécessaires, notamment dans le cas des toits encapsulés, notamment au niveau des tolérances dimensionnelles, des qualités optiques en réflexion et des contraintes de surface. Dans certain cas, il est donc préférable de bomber les feuilles de verre à l'état individuel.

L'invention concerne en premier lieu un procédé de bombage dit « feuille à feuille », ce qui signifie que les feuilles sont bombées individuellement, c'est-à-dire une par une et non pas à l'état empilé. Plusieurs feuilles bombées par le procédé selon l'invention peuvent éventuellement être ensuite assemblées pour former un vitrage feuilleté. Une feuille bombée selon l'invention peut également être assemblée avec une feuille bombée par un procédé différent de celui selon l'invention. Une feuille bombée selon l'invention peut également être utilisée individuellement sans être assemblée avec une autre.

La présente demande divulgue un dispositif et un procédé de fabrication d'une feuille de verre individuelle bombée comprenant une ceinture de compression périphérique, comprenant son chauffage à sa température de bombage dans un four, son bombage individuel, et son refroidissement général, une zone de la feuille au moins partiellement à l'intérieur de ladite ceinture de compression, dite zone refroidie localement, subissant, après le chauffage de la feuille, un refroidissement local plus rapide que le refroidissement général, alors que la feuille est à une température d'au moins 530°C. Dans le four, la feuille est convoyée et chauffée à l'état individuel. La feuille subit le refroidissement local à l'état individuel. Le refroidissement local génère dans ladite zone et au cours du refroidissement général de la feuille, des contraintes dans son épaisseur.

L'invention quant à elle concerne un procédé et un dispositif tel que définis dans les revendications 1 et 24.

La zone refroidie localement est distincte de la zone périphérique comprenant la ceinture de compression périphérique après le refroidissement général de la feuille. La ceinture de compression se forme de façon bien connue de l'homme du métier du fait du refroidissement général et sans utilisation d'un moyen de refroidissement spécifique à la zone périphérique. La zone refroidie localement se trouve au moins partiellement dans la région de la feuille à l'intérieur de la ceinture de compression, ce qui recouvre le fait que la zone refroidie localement puisse recouvrir en partie la zone de ceinture de compression. Cependant, de préférence, on évite un empiètement entre la zone refroidie localement et la ceinture de compression. En effet, si le refroidissement local produit une zone en compression, cette zone en compression est immédiatement suivie d'une zone en extension. Or on veut éviter que cette extension ne vienne réduire la compression de la ceinture de compression, car alors le bord serait localement moins renforcé que le reste de la ceinture de compression. Une ceinture de compression va du bord du verre jusqu'à une distance du bord du verre généralement d'au moins 2,5 mm et pouvant aller jusqu'à 10 mm. C'est notamment pourquoi, de préférence, la zone refroidie localement est à une distance du bord du verre supérieure à 1,5 cm (cette distance est celle entre le bord et le début de la zone refroidie localement). De préférence, la zone refroidie localement est à une distance du bord du verre supérieure à une fois le diamètre de la zone refroidie localement et de préférence supérieure à 1,3 fois le diamètre de la zone refroidie localement (ici également, cette distance est celle entre le bord et le début de la zone refroidie localement). Par « diamètre », on entend le diamètre équivalent, c'est-à-dire celui d'un cercle de même aire. Généralement, la zone refroidie localement recouvre une aire inférieure à 10% et même inférieure à 5% de l'aire d'une face principale de la feuille de verre, étant entendu que dans le cas d'un refroidissement en couronne, on compte l'aire intérieure de la couronne.

Selon l'invention, en vue de son bombage, la feuille est chauffée jusqu'à sa température de bombage, c'est-à-dire sa température de déformation plastique, ce chauffage pouvant la porter à une température comprise entre 590 et 660°C.
Selon l'invention, la feuille subit un refroidissement localisé à l'origine de contraintes dans l'épaisseur de la feuille finale refroidie. Ces contraintes sont générées dans la zone de la feuille ayant subi le refroidissement local. Ce refroidissement localisé peut être réalisé soit dans une ambiance chaude, notamment directement à la suite de la zone de chauffage du four, soit dans une ambiance froide. Dans le cas d'une ambiance chaude, le verre est dans une enceinte (zone finale du four ou enceinte suivant immédiatement le four) dont l'atmosphère est à une température comprise entre 400 et 650 °C. Dans le cas d'une ambiance froide, le verre est dans une ambiance d'atelier d'usine, dont l'atmosphère est à une température généralement comprise entre 5 et 50°C. Dans tous les cas, le refroidissement localisé est administré sur la feuille alors que celle-ci est dans une ambiance à une température inférieure à celle de la feuille.

L'outil de bombage est situé après la zone de chauffage de la feuille. L'outil de bombage peut être lui-même dans une ambiance chaude dont la température est généralement comprise dans le domaine allant de 400 à 650°C ou dans une ambiance froide dont la température est généralement comprise dans le domaine allant de 5 à 50°C. Dans ce dernier cas (ambiance froide), le bombage est réalisé après la sortie de la feuille du four et généralement hors de toute enceinte. Le bombage en ambiance chaude est préféré pour les pièces de forme très complexes au niveau de leurs courbures ou nécessitant un particulièrement haut niveau de trempe. En effet, une trempe administrée par soufflage d'air froid sur une feuille sortant directement d'une ambiance chaude mène à un fort niveau de trempe.

Dans tous les cas, l'outil de bombage, notamment une forme supérieure de bombage, qu'il soit en ambiance froide où en ambiance chaude, est généralement à une température inférieure à la température de la feuille arrivant pour être bombée.

Le refroidissement local est réalisé de façon à introduire un différentiel de température au plus tard pendant que les contraintes dans le verre se déterminent et de préférence déjà avant que les contraintes dans le verre ne se déterminent. Ce différentiel de température est une différence de température entre la zone ayant subi le refroidissement local (dite « zone refroidie localement ») et qui est rendue plus froide, et la région qui la jouxte immédiatement qui reste plus chaude.

Le refroidissement local est administré sur la feuille alors que celle-ci est à une température d'au moins 530°C, notamment à une température comprise dans le domaine allant de 530 à 660°C et de préférence dans le domaine allant de 550 à 610°C. Il s'agit là de températures juste avant l'administration du refroidissement local. Si le refroidissement local est administré alors que le verre est hors de toute enceinte, en ambiance froide donc, il est généralement administré alors que le verre est à une température comprise dans le domaine allant de 530 à 580°C. Le refroidissement local est exercé pendant le refroidissement général. Lequel commence généralement après le chauffage de la feuille à sa température de bombage.

Il convient que le différentiel de température ne soit pas perdue jusqu'au figeage du verre, lequel intervient généralement au plus tard au voisinage de 530°C.

Pour la réalisation du refroidissement local en ambiance chaude, le refroidissement local est réalisé alors que le verre est dans une enceinte, laquelle fait éventuellement partie du four, ou laquelle est distincte du four et suit le four immédiatement pour le verre. La zone d'ambiance chaude fait suite pour le verre à la zone de chauffage du verre dans le four. La zone d'ambiance chaude ne comprend pas d'éléments chauffants pour le verre. Dans cette zone d'ambiance chaude, le verre est à une température plus chaude que la température de l'atmosphère qui l'entoure. Le verre n'est pas chauffé après l'administration du refroidissement local.

La zone refroidie localement (notamment recouvrant une aire comprise entre 0,5 cm² et 70 cm²) doit rester plus froide que la région qui la jouxte immédiatement, jusqu'à ce que le verre soit suffisamment refroidi (vers 530°C) pour qu'il soit figé et que ses contraintes internes soient déterminées. Le refroidissement local peut être administré sur la zone du verre choisie dès la fin du chauffage à sa température de bombage, avant le bombage et/ou pendant le bombage et/ou après le bombage. Le refroidissement local peut être administré sur une face ou les deux faces principales de la feuille, et s'il est administré sur les deux faces, celui sur une face peut être en vis-à-vis de celui sur l'autre face ou non. Un refroidissement sur les deux faces de la feuille et en vis-à-vis produit un refroidissement localisé plus intense.

Le refroidissement général de la feuille est continuel (c'est-à-dire que la température baisse de façon monotone) dès le passage des derniers éléments chauffants dans le four.

Le refroidissement local peut être obtenu par convection, conduction, rayonnement, ou une combinaison de ces moyens. Un refroidissement local par convection selon lequel de l'air, généralement à une température comprise entre 0 et 50°C, est soufflé sur la zone choisie est bien adapté.

La zone concernée par le refroidissement local peut être une bande de quelques millimètres de large et ayant n'importe quelle forme. Sa forme peut être celle d'une ligne sur laquelle une découpe pourrait ultérieurement être réalisée. Après découpe, les deux bords formés par la découpe présentent des contraintes de compression de bord les renforçant. De préférence, le refroidissement local est suffisant en durée et en intensité pour que les contraintes de compression de bord après découpe dans la zone refroidie localement soient supérieures à 4 Mpa et de préférence supérieures à 8 Mpa. Des tests de routine permettent aisément cette mise au point. De préférence, le refroidissement local est administré pour la contrainte de compression locale soit inférieure à 20 MPa.

L'ensemble de la feuille subit un refroidissement général dès la fin de son chauffage, notamment après sa sortie du four, et ses bords se refroidissent plus rapidement que le reste de la feuille. C'est pourquoi le bord périphérique de la feuille comprend naturellement des contraintes de bord du fait du refroidissement général sans qu'il ne soit généralement nécessaire de souffler dessus. Ainsi, la feuille comprend une ceinture de contrainte de compression de bord supérieure à 4 Mpa et de préférence supérieures à 8 Mpa. Ces contraintes de bord périphériques sont souhaitées car les bords périphériques de la feuille sont plus susceptibles de subir des chocs que la zone centrale des surfaces principales. Le refroidissement local selon l'invention vient s'ajouter pour une zone déterminée au refroidissement général de la feuille. Le refroidissement local est plus rapide que le refroidissement général pour la zone refroidie localement.

L'invention concerne également un procédé de fabrication d'un vitrage bombé comprenant une feuille de verre comprenant une ceinture de compression périphérique et un orifice au moins partiellement à l'intérieur de la ceinture de compression périphérique, ledit orifice présentant une contrainte de compression de bord d'au moins 4 MPa et de préférence d'au moins 8 MPa, comprenant la préparation de la feuille de verre par le procédé selon l'invention comprenant le refroidissement local, suivi de la découpe de l'orifice dans la zone refroidie localement.

Dans le cadre de la présente demande, les valeurs de contraintes en compression sont déterminées par la méthode décrite dans la norme ASTM F218 -2005-01. Généralement les valeurs de contrainte en compression de bord sont déterminées entre 0,1 et 2 mm d'un bord et de préférence entre 0,5 et 1 mm d'un bord. Pour le cas où une zone locale de contrainte en compression n'entoure pas un orifice dans la mesure où c'est une zone laissant la possibilité de créer un orifice ultérieurement, alors la valeur de contrainte est déterminable après découpe suivi de la mesure de la contrainte à la distance du bord comme cela vient d'être indiqué.

Pour le cas où le refroidissement local est administré en vue de la réalisation d'un orifice, la zone refroidie localement peut concerner uniquement la ligne de découpe ou l'intégralité de la zone éliminée à la découpe. Par exemple si l'orifice futur est circulaire, et que le refroidissement local est administré par une buse de soufflage d'air, l'orifice de la buse peut avoir la forme d'un disque ou celle d'une couronne. Dans le cas d'un disque, le diamètre du disque est légèrement supérieur à celui du cercle à découper et c'est toute la surface à l'intérieur du cercle qui subit le refroidissement contrôlé local. Dans le cas d'une buse en couronne, on souffle sur une zone en couronne sur le cercle et pas à l'intérieur de cette couronne. A diamètre de zone refroidie identique, on préfère refroidir localement une zone en couronne par rapport à une zone en disque car cela est moins couteux sur un plan énergétique. De plus, comme une mise en compression entraîne nécessairement une mise en extension dans une région voisine, plus on réduit l'aire de la zone de refroidissement et donc l'aire de la zone en compression, plus on réduit l'aire de la zone voisine mise en extension. Or la réduction de l'aire de la zone en extension est favorable pour la robustesse du verre. C'est une raison importante pour laquelle on préfère refroidir en anneau plutôt qu'en disque puisqu'un anneau a une plus faible surface qu'un disque à même diamètre externe, et l'extension crée sera plus réduite. De plus, pour le cas où le refroidissement est administré par conduction (c'est-à-dire par contact), il est plus aisé d'assurer un contact en anneau plutôt qu'en disque sur un verre bombé.

On utilise une buse en couronne plutôt pour les plus grands orifices. Un orifice, circulaire ou non, peut avoir une aire comprise entre 0,5 cm² et 70 cm². Dans ce cas, la zone refroidie localement recouvre une aire comprise entre 0,5 cm² et 70 cm², que le refroidissement ait été exercé en couronne (l'aire recouvre aussi la zone à l'intérieur de la couronne) ou en disque, et de façon à permettre la découpe d'un orifice d'aire comprise entre 0,5 cm² et 70 cm², ledit orifice ayant un bord présentant un contrainte en compression d'au moins 4MPa et de préférence d'au moins 8MPa. De préférence, la découpe est réalisée sur de la zone refroidie localement, c'est-à-dire de la zone en compression, de façon à laisser un bord en compression après la découpe. L'aire de la zone refroidie localement (y compris le cas échéant l'intérieur de la couronne) est donc de préférence plus grande que l'aire de la zone découpée. Par rapport au contour extérieur de la zone refroidie localement, le contour de la zone découpée se trouve de préférence à au moins 0,5 mm et de préférence à au moins 1 mm du bord de la zone refroidie localement et devenue en compression, et à l'intérieur de cette zone.

Une feuille obtenue selon le procédé précédemment divulgué peut être découpée à la température ambiante sur la zone refroidie localement. Elle peut être découpée avant montage sur un véhicule ou après montage sur un véhicule. Par exemple, il peut s'agir d'une zone pouvant être percée pour laisser passer un support de barre de toit et le choix de découper ou non la feuille peut être laissée à l'initiative du propriétaire du véhicule.

Plusieurs feuilles obtenues par le procédé précédemment divulgué peuvent être assemblées en un vitrage feuilleté. Cet assemblage se fait de façon bien connu de l'homme du métier en intercalant une feuille de matériau polymère entre deux feuilles de verre. Généralement, les zones refroidies localement ayant sont en vis-à-vis dans le vitrage feuilleté. Dans ce cas, un orifice traversant du vitrage feuilleté entier peut être réalisé par découpe après son assemblage. On peut découper l'assemblage feuilleté à partir d'une seule de ses faces principales ou de ses deux faces principales à la fois par l'un des moyens suivants :
- scie cloche ou fraiseuse: on découpe de préférence les deux faces principales à la fois,
- jet d'eau : un seul côté suffit.

On peut également assembler en un vitrage feuilleté une feuille ayant subi un refroidissement localisé selon l'invention avec une feuille n'ayant pas subi de refroidissement localisé selon l'invention. Dans ce cas, si une découpe est réalisée elle ne concerne généralement que la feuille ayant subi le refroidissement, l'autre n'étant pas découpée. Cette découpe peut par exemple servir à loger un élément comme un éclairage d'intérieur de véhicule, le feuilleté faisant par exemple office de toit dudit véhicule.

Il est avantageux de pouvoir découper le verre après le bombage car la forme donné par le bombage n'est pas influencée par l'orifice à l'endroit ultérieurement découpé. En effet, si un orifice est découpé avant bombage, la forme du verre peut présenter des défauts au niveau de l'orifice. L'existence d'un orifice lors du formage a une influence sur l'aspect optique en réflexion et une distorsion optique est observée aux abords de l'orifice. Par ailleurs, dans le cas de l'assemblage en un feuilleté de plusieurs feuilles découpées avant assemblage (art antérieur), comprenant par exemple un orifice, un décalage entre les verres peut exister au niveau de l'orifice en raison d'un alignement imparfait des verres au moment de l'assemblage. De plus, la présence de l'orifice au moment du formage, augmente la complexité technique pour la faisabilité du produit, ce qui a un impact sur le rendement du four et sur la faisabilité du vitrage. Ces difficultés sont plus grandes dans les cas suivants:
- réalisation de plusieurs trous,
- forte taille du trou,
- si le trou présente un côté linéaire (forme carrée ou rectangulaire par exemple),
- si le trou est en zone fortement bombée.

Selon l'invention, un découpage du verre après assemblage en feuilleté remédie à ce problème de mauvais alignement puisque les différentes feuilles du feuilleté peuvent être percées en même temps. Ainsi, selon l'art antérieur, une opération de perçage est nécessaire pour chaque feuille et pour l'intercalaire en matériau polymère (généralement en PVB). Selon l'art antérieur, la découpe du matériau polymère nécessite en effet une opération supplémentaire, et de plus, afin de garantir le dégazage lors de l'assemblage du feuilleté, une opération supplémentaire est nécessaire avec la mise en place d'un élément (ventouse, poche, green snake, etc.) permettant d'étanchéifier le trou pendant l'opération de dégazage. Au contraire, selon la présente invention, un assemblage classique est réalisé puis une seule opération de perçage est nécessaire pour tout le feuilleté. L'orifice ainsi réalisé est parfaitement continu au travers du feuilleté alors que selon l'art antérieur (un perçage par feuille avant assemblage), les tolérances sont élargies par l'addition des tolérances des différents perçages.

Le refroidissement local générant des contraintes dans le verre peut aussi être réalisé sans qu'il ne soit nécessairement envisagé de le découper dans cette zone. En effet, on peut vouloir réaliser un vitrage feuilleté avec un élément supplémentaire inséré dans le vitrage, au niveau de l'intercalaire en matériau polymère (comme le PVB) entre deux feuilles de verre assemblées. Il peut s'agir d'un élément ayant une fonction éclairante et comprenant par exemple une LED ou OLED, ou encore d'un capteur ou récepteur ou détecteur ou d'un simple élément esthétique. Cette intégration dans le vitrage peut en effet mener à sa casse. Un renfort local selon l'invention améliore la robustesse du verre à l'endroit choisi pour placer cet élément supplémentaire et permet cette intégration. Par ailleurs, si le vitrage doit être fortement sollicité mécaniquement en un endroit donné, par exemple parce qu'il doit recevoir un système d'ouverture ou de fermeture, ou une poignée, alors, le renforcement local selon l'invention sécurise la solidité du verre à l'endroit choisi.

Pour le cas où l'on assemble dans un feuilleté plusieurs feuilles bombées individuellement, de préférence, on assemble des feuilles s'étant immédiatement suivies dans le procédé de bombage de façon à ce qu'une éventuelle dérive du procédé ait le moins d'influence possible sur la forme des différentes feuilles à assembler. Si l'on doit assembler une feuille sans refroidissement localisé et une feuille avec refroidissement localisé, on fait suivre ces deux feuilles immédiatement l'une après l'autre, à la seule différence que le refroidissement est effectué pour une feuille et pas pour l'autre.

Les feuilles passent l'une après l'autre par une étape de bombage puis de refroidissement. Le procédé de bombage peut être de tout type, notamment par effondrement ou par pressage. Dans tous les cas, dans un procédé industriel, les feuilles individuelles sont convoyées l'une derrière l'autre et de préférence sur un lit de rouleaux jusqu'à l'outil de bombage pour le bombage individuel des feuilles. Pour le cas où l'outil de bombage comprend une forme supérieure de bombage, le lit de rouleau emmène la feuille jusque sous ladite forme. Ainsi, au cours du procédé selon l'invention, la feuille est convoyée et chauffée à l'état individuel dans le four, puis bombée à l'état individuel. La feuille subit le refroidissement local alors qu'elle est à l'état individuel. Notamment, ce refroidissement local peut être exercé avant le bombage. Notamment, ce refroidissement local peut être exercé pendant le bombage. Notamment, ce refroidissement local peut être exercé après le bombage.

Le refroidissement local peut être appliqué sur le verre au cours de son convoyage avant bombage ou après bombage. L'application du refroidissement local peut être fixe et appliqué sur la feuille pendant qu'elle défile. Ce refroidissement local peut être temporaire pour ne concerner qu'une zone de la feuille. L'application du refroidissement local peut être mobile. En effet, le refroidissement local peut suivre la feuille au cours de son convoyage, ce qui permet d'effectuer un refroidissement plus long sur une même zone sans devoir ralentir la feuille. Le refroidissement local peut aussi être effectué pendant le bombage, étant entendu qu'il peut commencer avant le bombage et qu'il peut continuer après le bombage. Pour le cas d'un refroidissement local pendant un bombage contre une forme de bombage, notamment une forme supérieure de bombage, le système de refroidissement peut être intégré à la forme de sorte que le refroidissement est administré par la face de formage. Si la forme de bombage est chauffée, le refroidissement local peut être administré par une régulation différente du chauffage au niveau de la zone à refroidir localement, voire même à l'absence de chauffage localement.

Après son chauffage dans le four, la feuille subit un refroidissement général. Ce refroidissement peut être plus ou moins rapide. Ce peut être un refroidissement lent ne générant pas particulièrement de contraintes dans le verre. Ce refroidissement général peut inclure un refroidissement rapide du type semi-trempe (on dit aussi « durci ») ou du type trempe. Le refroidissement local selon l'invention est généralement administré avant l'application de ce refroidissement rapide. Un traitement de semi-trempe ou de trempe après bombage confère à la feuille une contrainte de surface comprise dans le domaine allant de 20 à 200 MPa. Dans le cadre de l'invention, un refroidissement général du type semi-trempe peut générer une contrainte de surface du verre comprise dans le domaine allant de 20 à 90 MPa. La contrainte de surface est influencée par l'épaisseur du verre. Pour une épaisseur de la feuille d'au moins 2 mm, la contrainte de surface peut être comprise dans le domaine allant de 30 à 90 MPa (semi-trempe). Pour une épaisseur de la feuille inférieure à 2 mm, la contrainte de surface peut être comprise dans le domaine allant de 20 à 50 MPa (semi-trempe). Une trempe se traduit par une contrainte de surface du verre supérieure à 90 MPa. Généralement, la contrainte de surface de la feuille est d'au plus 200 MPa. La contrainte de surface peut être déterminée par un appareil fonctionnant sur le principe de la polariscopie comme le polariscope Scalp-04, la valeur déterminée étant une moyenne de 5 mesures sur une surface principale de substrat verrier et à au moins 20 cm du bord. Les valeurs de contrainte de surface ci-dessus mentionnées sont des valeurs absolues, puisque l'homme du métier peut aussi les exprimer avec un signe négatif.

L'invention est particulièrement adaptée au bombage de feuilles individuelles d'épaisseur comprise dans le domaine allant de 0,7 à 3 mm et plus particulièrement allant de 0,8 à 1,2 mm.

L'invention concerne également un dispositif de bombage d'une feuille de verre comprenant un four comprenant des éléments de chauffage pour chauffer le verre à sa température de bombage, un outil de bombage individuel de la feuille, un moyen de déplacement de la feuille dans le four et jusqu'à l'outil de bombage, et un moyen de refroidissement local de la feuille après son chauffage par les éléments de chauffage. Notamment, le moyen de refroidissement local peut être placé pour intervenir sur une zone de la feuille avant l'outil de bombage ou pendant que la feuille est sur ou sous l'outil de bombage. Par exemple, l'outil de bombage peut comprendre une forme supérieure de bombage et lorsque le verre est sous elle avant son bombage, le refroidissement peut déjà intervenir. Notamment, l'outil de bombage peut comprendre une forme supérieure de bombage et un cadre de pressage, ces deux outils étant aptes à se déplacer pour se rapprocher ou s'éloigner afin de bomber la feuille entre eux. Notamment, le moyen de refroidissement local peut être embarqué sur le cadre de pressage. Le moyen de refroidissement local peut également être incorporé à la forme supérieure de bombage. La zone refroidie localement peut recouvrir une aire comprise entre 0,5 cm² et 70 cm². Notamment, l'invention concerne un dispositif de bombage d'une feuille de verre individuelle comprenant un four comprenant des éléments de chauffage pour chauffer la feuille à l'état individuel à sa température de bombage, un outil de bombage de la feuille individuelle, un moyen de déplacement de la feuille à l'état individuel dans le four et jusqu'à l'outil de bombage, et un moyen de refroidissement local de la feuille après son chauffage par les éléments de chauffage, la zone refroidie localement recouvrant une aire comprise entre 0,5 cm² et 70 cm². Plusieurs zones refroidies localement recouvrant chacune une aire comprise entre 0,5 cm² et 70 cm² peuvent être concernées.

Après bombage, un cadre de refroidissement peut être chargé de récupérer le verre bombé pour l'emmener en zone de refroidissement dans le cadre du refroidissement général. Le moyen de refroidissement local peut être embarqué sur le cadre de refroidissement. Le cadre de refroidissement peut notamment passer sous la forme supérieure de bombage qui largue alors le verre bombé sur lui, lequel s'éloigne alors de la forme de bombage pour entraîner le verre en zone de refroidissement.

Le moyen de refroidissement local est administré sur la feuille par convection et/ou conduction et/ou rayonnement. Notamment, il peut être réalisé par soufflage d'air et le moyen de refroidissement local peut comprendre une buse de soufflage d'air.

Selon l'invention, les feuilles individuelles défilent les unes derrière les autres à l'état individuel dans le four, et jusqu'à l'outil de bombage, grâce au moyen de déplacement. Le moyen de déplacement de la feuille peut comprendre un lit de rouleaux. Après bombage, les feuilles individuelles sont entrainées les unes derrières les autres dans une zone de refroidissement. Ce refroidissement comprend généralement un refroidissement rapide du type semi-trempe ou trempe, suivi d'un refroidissement général plus lent. Ainsi, le dispositif selon l'invention peut comprendre, après l'outil de bombage sur le chemin de la feuille, une unité de soufflage d'air pouvant administrer une semi-trempe ou une trempe à la feuille.

L'invention concerne également procédé de fabrication d'un vitrage bombé comprenant une feuille de verre comprenant une ceinture de compression périphérique comprenant la préparation de la feuille de verre par le procédé de bombage et refroidissement tel que défini précédemment suivi d'une découpe dans la zone refroidie localement. L'invention concerne notamment un procédé de fabrication d'un vitrage bombé comprenant une feuille de verre comprenant une ceinture de compression périphérique, ledit procédé comprenant la fabrication d'une feuille de verre individuelle bombée comprenant une ceinture de compression périphérique, ladite fabrication comprenant le chauffage de la feuille de verre à sa température de bombage dans un four, son bombage individuel, et son refroidissement général, une zone de la feuille au moins partiellement à l'intérieur de ladite ceinture de compression périphérique, dite zone refroidie localement, subissant, après le chauffage de la feuille, un refroidissement local plus rapide que le refroidissement général, alors que la feuille est à une température d'au moins 530°C, suivi de la découpe de la feuille dans la zone refroidie localement. Dans ce procédé, la feuille est individuelle (non juxtaposée à une autre feuille) du chauffage dans le four jusqu'à au moins la fin du refroidissement local.

L'invention concerne également une ligne de fabrication d'un vitrage bombé comprenant une feuille de verre, ladite ligne comprenant le dispositif selon l'invention et un moyen de découpe de la feuille de verre bombée, c'est-à-dire à l'état individuel ou après assemblage dans un vitrage feuilleté.

L'invention est applicable à la réalisation de:
- trou d'antenne,
- trou de barre de toit,
- trou d'axe d'essuie-glace,
- trou pour intégration d'élément électronique (éclairage, GPS, etc.),
- trou de maintien (charnière, support),
- renfort pour feuilletage local d'élément (LED, OLED, composant électronique, éléments structurants, etc.)
- renfort pour sollicitation mécanique local d'un système (point d'accroche, point d'appuis).

L'invention est applicable à tous les vitrages de véhicule (automobile, bus, camion, train, véhicule agricoles) et pour tout type de vitrage de ces véhicules tels que pare-brise, lunette, latérales, custodes, toits, bayflush et autres.

L'invention est également applicable aux vitrages dans les domaines du bâtiment, du solaire, des applications de spécialité, de l'aéronautique.

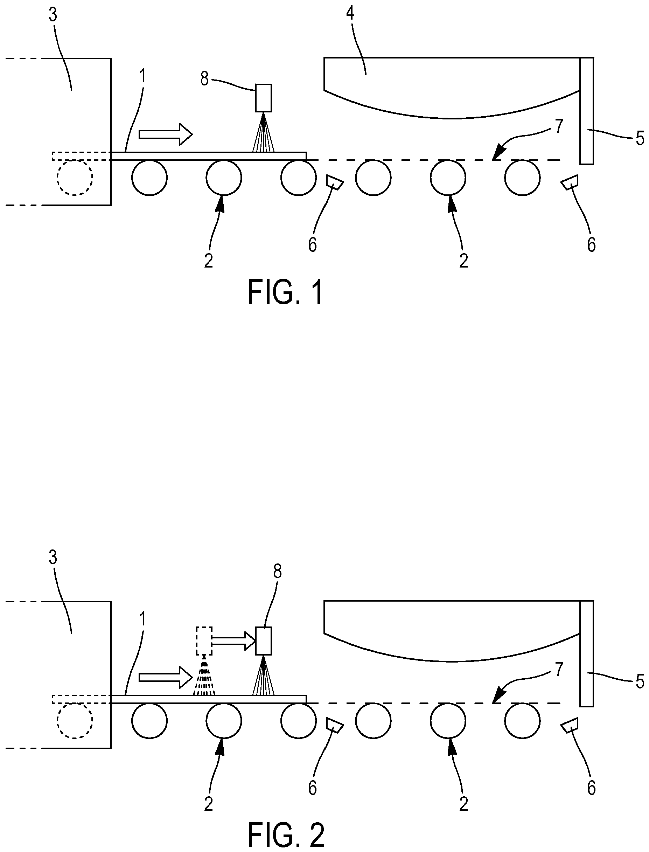

La figure 1 représente un dispositif de bombage de feuilles de verre 1 individuelles défilant les unes derrière les autres sur un lit de rouleau 2. Le lit de rouleau traverse un four 3 chauffant chaque feuille plane jusqu'à sa température de déformation plastique. La feuille sort du four et arrive ensuite sous une forme supérieure de bombage 4 convexe. La feuille est arrêtée en position idoine sous la forme supérieure de bombage grâce à un système de butées 5. Une fois que la feuille prise en charge par la forme supérieure de bombage, la butée peut éventuellement être escamotée. Une contreforme inférieure de bombage 6 du type cadre de pressage, est en position basse sous la surface de réception de la feuille comme indiqué par la ligne virtuelle 7. Un jet d'air de refroidissement local est assuré par la buse 8 sur la face supérieure de la feuille et sur une zone limitée, dite zone refroidie localement, afin de porter cette zone à une température inférieure au reste de la feuille. La buse 8, agissant en tant que moyen de refroidissement local, peut souffler un temps court afin d'impacter une petite zone, ou un temps plus long de sorte que l'étendue de la zone impactée par le refroidissement local est agrandie du fait du déplacement de la feuille pendant le soufflage. Une différence de température continuera à être présente pendant le bombage et après le bombage au cours du refroidissement général de la feuille, produisant des contraintes particulières au niveau de la zone refroidie localement par la buse 8.

La figure 2 représente le même dispositif que celui de la figure 1 sauf que la buse 8 se déplace pendant le déplacement de la feuille 1 (les flèches symbolisent les déplacements) . La position initiale de la buse est représentée en pointillés. La buse 8 peut se déplacer à la même vitesse que la feuille ou à une vitesse différente, généralement plus faible que la vitesse de la feuille. Ce mode de réalisation permet de refroidir plus longtemps une même zone de la feuille sans devoir ralentir la feuille.

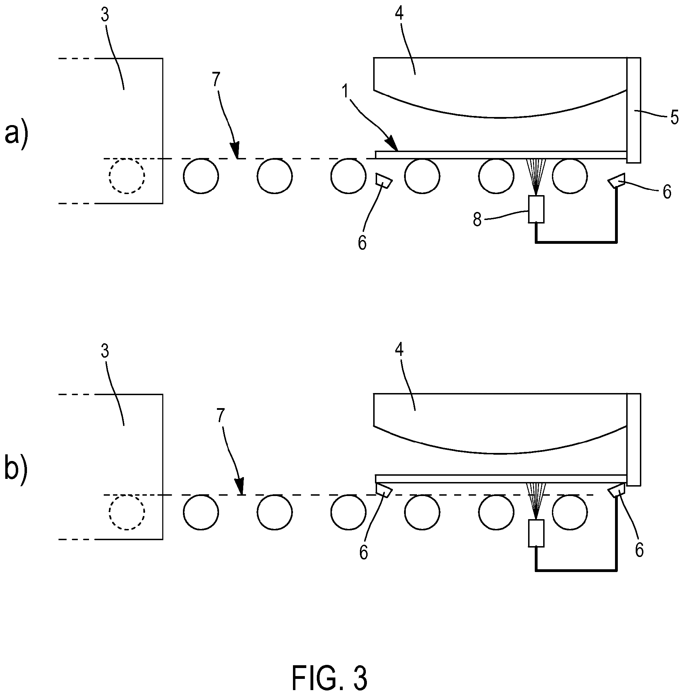

La figure 3 représente le même dispositif que celui de la figure 1 sauf que la buse 8, agissant en tant que moyen de refroidissement local, souffle sur la face inférieure de la feuille lorsque celle-ci est arrêtée en position de bombage sous la forme supérieure de bombage 4. La buse est ici embarquée (c'est-à-dire solidaire) sur le cadre de pressage 6. Elle peut donc souffler dès que la feuille est présente au-dessus d'elle (figure 3a) et pendant la montée de la feuille vers la forme supérieure de bombage 4 (figure 3b), ladite feuille étant alors supportée par le cadre de pressage 6.

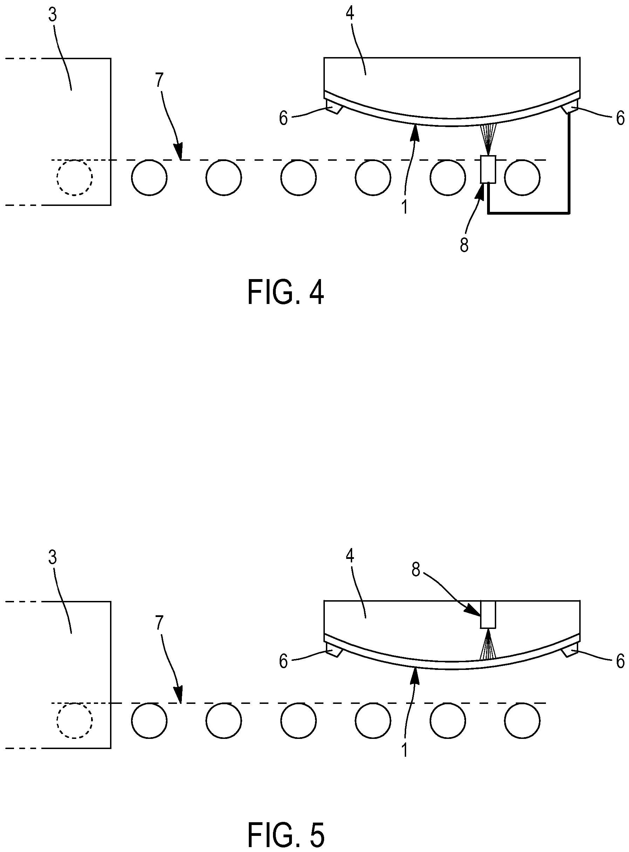

La figure 4 représente le même dispositif que celui de la figure 3 mais intervenant à un stade ultérieur, au cours du bombage de la feuille 1. Alors que la feuille 1 est pressée entre la contreforme inférieure 6 (cadre de pressage) et la forme supérieure de bombage 4 et est donc en cours de bombage, la buse 8 souffle de l'air de refroidissement sur une zone locale de la face inférieure de la feuille. La buse 8 agit en tant que moyen de refroidissement local.

La figure 5 représente le même dispositif que celui de la figure 4 sauf que la buse de soufflage 8 est incorporée dans la forme supérieure de bombage 4. L'air de refroidissement est soufflé alors que la feuille est plaquée contre la forme 4. La forme peut comprendre un orifice afin que l'air de refroidissement puisse venir directement au contact de la zone locale de la face supérieure de la feuille. Bien entendu l'air soufflé est canalisée jusqu'à la feuille puis évacuée hors de la forme de bombage par une canalisation (non représentée) dans la forme de bombage.

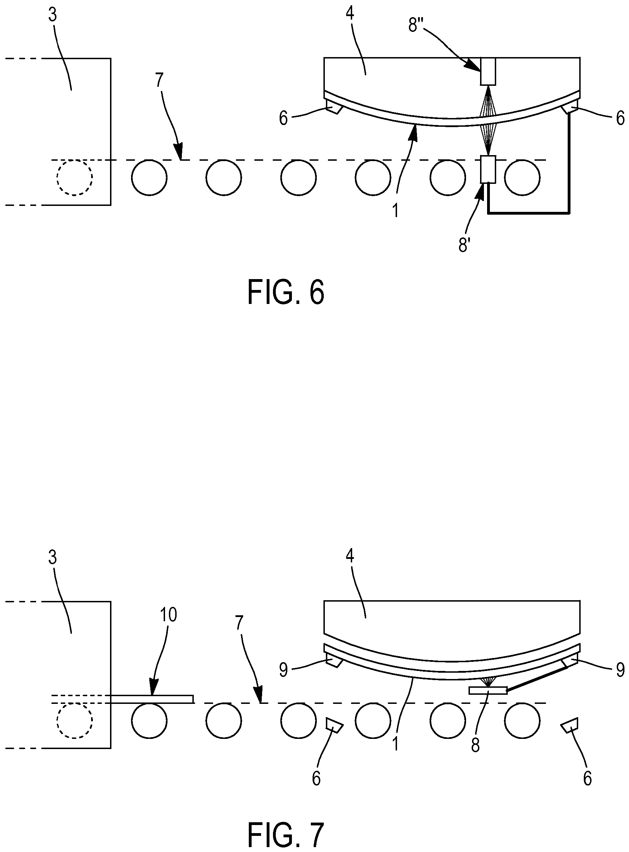

La figure 6 représente un dispositif combinant les systèmes de refroidissement localisé des figures 4 et 5. Ici, deux buses 8' et 8"soufflent en même temps contre la feuille, de part et d'autre de celle-ci et généralement au même endroit, c'est-à-dire en vis-à-vis sur la même zone de part et d'autre de la feuille. Le refroidissement local est de la sorte plus intense. Les buses 8' et 8" agissent en tant que moyen de refroidissement local.

La figure 7 représente un dispositif selon l'invention dans lequel le refroidissement localisé est effectué juste après le bombage. Après bombage contre la forme supérieure 4, le cadre de pressage 6 est redescendu sous la surface de réception 7 du verre. Le verre est alors maintenu contre la forme supérieure 4 grâce à un système d'aspiration au travers de sa face de contact avec le verre. Un cadre de refroidissement 9 est passé sous la forme 4 puis la forme 4 a largué le verre sur le cadre 9 par arrêt de l'aspiration. Une buse de soufflage 8, agissant en tant que moyen de refroidissement local, est solidaire du cadre de refroidissement et peut souffler de l'air de refroidissement localement sur le verre dès que le cadre de refroidissement 9 se trouve sous le verre. La buse 8 peut souffler alors que le verre est séparé de la forme 4 et alors que le verre est éloigné de la forme 4 par le cadre 9 pour aller en zone de refroidissement. Une feuille 10 est à l'approche en sortant du four 3 pour subir le même traitement que le verre 1 après celui-ci.

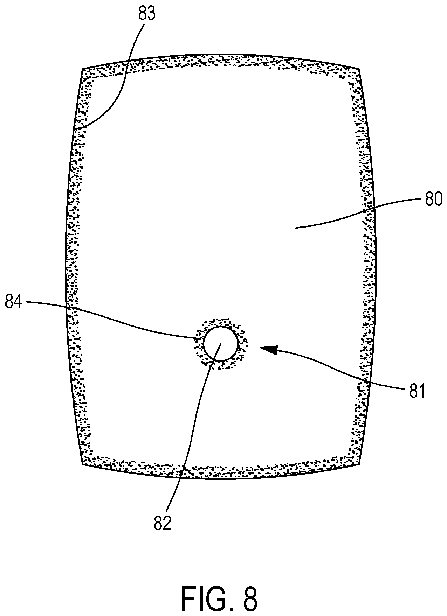

La figure 8 représente un toit bombé de véhicule automobile en verre feuilleté 80 comprenant un orifice 81 pour une antenne. Le feuilleté associe deux feuilles de verre bombées selon l'invention, la zone pour l'antenne ayant été refroidie localement selon l'invention pour chacune des deux feuilles. L'orifice 82 a été réalisé après assemblage du feuilleté en une seule opération de percement. Les zones grisées représentent les zones comprenant des contraintes de compression de bord. La périphérie de vitrage comprend une ceinture de contraintes de compression 83 qui s'est produite naturellement après bombage au cours du refroidissement, sans qu'il soit nécessaire de souffler dessus. La bordure de l'orifice 82 comprend également des contraintes de compression de bord 84 qui ont été réalisées grâce au soufflage local selon l'invention. L'orifice 82 se trouve dans la région de la feuille à l'intérieur de la ceinture de compression.

## Revendications

1. Procédé de fabrication d'un vitrage bombé comprenant une feuille de verre comprenant une ceinture de compression périphérique (83) comprenant la préparation de ladite feuille de verre par un procédé de fabrication d'une feuille de verre individuelle bombée comprenant une ceinture de compression périphérique, comprenant son chauffage à sa température de bombage dans un four (3), son bombage individuel, et son refroidissement général, **caractérisé en ce qu'**une zone (84) de la feuille au moins partiellement à l'intérieur de ladite ceinture de compression périphérique, dite zone refroidie localement, subit, après le chauffage de la feuille, un refroidissement local plus rapide que le refroidissement général, alors que la feuille est à une température d'au moins 530°C, puis la feuille de verre subit une découpe dans la zone refroidie localement.

2. Procédé selon la revendication précédente, **caractérisé en ce que** le refroidissement local est exercé avant le bombage.

3. Procédé selon l'une des revendications précédente, **caractérisé en ce que** le refroidissement local est exercé pendant le bombage.

4. Procédé selon l'une des revendications précédentes, **caractérisé en ce que** le refroidissement local est exercé après le bombage.

5. Procédé selon l'une des revendications précédentes, **caractérisé en ce que** la feuille est chauffée à l'état individuel dans le four.

6. Procédé selon l'une des revendications précédentes, **caractérisé en ce que** la feuille subit le refroidissement local à l'état individuel.

7. Procédé selon l'une des revendications précédentes, **caractérisé en ce que** le bombage est réalisé après la sortie de la feuille du four.

8. Procédé selon l'une des revendications précédentes, **caractérisé en ce que** le refroidissement local est exercé alors que la feuille est dans une ambiance dont la température est comprise dans le domaine allant de 5 à 50°C.

9. Procédé selon l'une des revendications 1 à 6 **caractérisé en ce que** le refroidissement local est exercé alors que la feuille est dans une enceinte dont l'ambiance est à une température comprise dans le domaine allant de 400 à 650 °C et est à une température est inférieure à celle de la feuille.

10. Procédé selon l'une des revendications précédentes, **caractérisé en ce que** le refroidissement local est administré sur la feuille alors que celle-ci est à une température comprise dans le domaine allant de 530 à 660°C et de préférence de 550 à 610°C.

11. Procédé selon l'une des revendications précédentes, **caractérisé en ce que** le refroidissement local est administré sur la feuille par convection et/ou conduction et/ou rayonnement.

12. Procédé selon la revendication précédente, **caractérisé en ce que** le refroidissement local est réalisé par soufflage d'air.

13. Procédé selon l'une des revendications précédentes, **caractérisé en ce que** la feuille a une épaisseur comprise dans le domaine allant de 0,7 à 3 mm et plus particulièrement allant de 0,8 à 1,2 mm.

14. Procédé selon l'une des revendications précédentes, **caractérisé en ce que** la feuille subit un traitement de semi-trempe ou de trempe après bombage, lui conférant une contrainte de surface comprise dans le domaine allant de 20 à 200 MPa.

15. Procédé selon l'une des revendications précédentes, **caractérisé en ce que** la zone refroidie localement recouvre une aire comprise entre 0,5 cm² et 70 cm².

16. Procédé selon la revendication précédente, **caractérisé en ce que** la zone refroidie localement est à une distance du bord du verre supérieure à une fois le diamètre de la zone refroidie localement et de préférence supérieure à 1,3 fois le diamètre de la zone refroidie localement.

17. Procédé selon l'une des revendications précédentes, **caractérisé en ce que** la zone refroidie localement est à une distance du bord du verre supérieure à 2 cm.

18. Procédé selon l'une des revendications précédentes, **caractérisé en ce que** la zone refroidie localement recouvre une aire inférieure à 10% et même inférieure à 5% de l'aire d'une face principale de la feuille de verre.

19. Procédé selon l'une des revendications précédentes, **caractérisé en ce que** le refroidissement local est suffisant en durée et en intensité pour que les contraintes de compression de bord après découpe dans ladite zone refroidie localement soient supérieures à 4 Mpa et de préférence supérieures à 8 Mpa.

20. Procédé selon l'une des revendications précédentes, **caractérisé en ce qu'**un orifice est découpé dans la zone refroidie localement au moins partiellement à l'intérieur de la ceinture de compression périphérique, ledit orifice présentant une contrainte de compression de bord d'au moins 4 MPa et de préférence d'au moins 8 MPa.

21. Procédé selon l'une des revendications précédentes, **caractérisé en ce que** la feuille est convoyée à l'état individuel lors de son chauffage et jusqu'à l'outil de bombage sur un lit de rouleaux.

22. Procédé selon l'une des revendications précédentes, **caractérisé en ce qu'**avant sa découpe, la feuille est assemblée avec une autre feuille de verre pour former un vitrage feuilleté.

23. Procédé selon la revendication précédente, **caractérisé en ce que** plusieurs feuilles de verre obtenues par le même procédé avant la découpe sont assemblées en un vitrage feuilleté, les zones refroidies localement des feuilles de verre étant en vis-à-vis dans le vitrage feuilleté avant la découpe, puis la découpe produisant un orifice traversant au vitrage feuilleté entier.

24. Dispositif de bombage d'une feuille de verre individuelle comprenant une ceinture de compression périphérique (83) comprenant :
- un four (3) comprenant des éléments de chauffage pour chauffer la feuille à sa température de bombage,
- un outil de bombage (4, 6) de la feuille de verre individuelle chauffée à sa température de bombage dans ledit four (3), l'outil de bombage comprenant une forme supérieure de bombage (4) et une contreforme inférieure de bombage (6) de type cadre de pressage, ledit cadre de pressage (6) étant configuré pour presser ladite feuille de verre individuelle chauffée à sa température de bombage dans ledit four (3) contre la forme supérieure de bombage (4) afin d'obtenir une feuille de verre individuelle bombée,
- un moyen de déplacement (2) de la feuille individuelle dans le four (3) et jusqu'à l'outil de bombage (4, 6),
- un cadre de refroidissement (9) pour réceptionner la feuille de verre individuelle après bombage et emmener ladite feuille de verre individuelle bombée dans une zone de refroidissement et
- un moyen de refroidissement local (8) de la feuille individuelle après son chauffage par les éléments de chauffage du four (3), dans lequel ledit moyen de refroidissement local est configuré pour produire une zone refroidie localement distincte de la zone périphérique comprenant la ceinture de compression périphérique (83) et recouvrant une aire comprise entre 0,5 cm² et 70 cm², ladite zone refroidie localement étant destinée à la réalisation d'une découpe d'un orifice (82) dans cette zone de la feuille produisant un bord ayant une contrainte de compression de bord.

25. Dispositif selon la revendication précédente, **caractérisé en ce que** le moyen de refroidissement local est placé pour intervenir sur une zone de la feuille avant l'outil de bombage ou pendant que la feuille est sur ou sous l'outil de bombage.

26. Dispositif selon l'une des revendications précédentes de dispositif, **caractérisé en ce que** l'outil de bombage comprend une forme supérieure de bombage (4) et un cadre de pressage (6), le moyen de refroidissement local (8) étant embarqué sur ledit cadre de pressage.

27. Dispositif selon l'une des revendications précédentes de dispositif, **caractérisé en ce que** l'outil de bombage comprend une forme supérieure de bombage (4), le moyen de refroidissement local (8) étant incorporé à ladite forme supérieure de bombage.

28. Dispositif selon l'une des revendications précédentes de dispositif, **caractérisé en ce qu'**il comprend un cadre de refroidissement (9) pour réceptionner le verre après bombage et l'emmener dans une zone de refroidissement, le moyen de refroidissement local étant embarqué sur ledit cadre de refroidissement.

29. Dispositif selon l'une des revendications précédentes de dispositif, **caractérisé en ce que** le moyen de refroidissement local agit par convection et/ou conduction et/ou rayonnement.

30. Dispositif selon la revendication précédente, **caractérisé en ce que** le moyen de refroidissement local (8) comprend une buse de soufflage d'air.

31. Dispositif selon l'une des revendications précédentes de dispositif, **caractérisé en ce que** le moyen de déplacement de la feuille comprend un lit de rouleaux (2).

32. Dispositif selon l'une des revendications précédentes de dispositif, **caractérisé en ce que** l'outil de bombage (4, 6) est situé après le four (3).

33. Dispositif selon l'une des revendications précédentes de dispositif, **caractérisé en ce qu'**il comprend, après l'outil de bombage, une unité de soufflage d'air pouvant administrer une semi-trempe ou une trempe à la feuille.

34. Ligne de fabrication d'un vitrage bombé comprenant une feuille de verre, ladite ligne comprenant le dispositif de l'une des revendications précédentes de dispositif et un moyen de découpe de la feuille de verre bombée dans la zone refroidie localement.

## Patentansprüche

1. Verfahren zum Herstellen einer gebogenen Verglasung, umfassend eine Glasscheibe, umfassend einen peripheren Druckgurt (83), umfassend die Anfertigung der Glasscheibe durch ein Verfahren zum Herstellen einer individuellen gebogenen Glasscheibe, umfassend einen peripheren Druckgurt, umfassend deren Erhitzung auf ihre Biegetemperatur in einem Ofen (3), deren individuelles Biegen und deren allgemeine Abkühlung,
**dadurch gekennzeichnet, dass** eine Zone (84) der Scheibe, die mindestens teilweise innerhalb des peripheren Druckgurts liegt, genannt lokal abgekühlte Zone, nach dem Erhitzen der Scheibe eine lokale Abkühlung erfährt, die schneller als die allgemeine Abkühlung ist, während die Scheibe bei einer Temperatur von mindestens 530 °C ist, anschließend die Glasscheibe in der lokal abgekühlten Zone einen Schnittvorgang erfährt.

2. Verfahren nach dem vorstehenden Anspruch,
**dadurch gekennzeichnet, dass** die lokale Abkühlung vor dem Biegen ausgeübt wird.

3. Verfahren nach einem der vorstehenden Ansprüche,
**dadurch gekennzeichnet, dass** die lokale Abkühlung während des Biegens ausgeübt wird.

4. Verfahren nach einem der vorstehenden Ansprüche,
**dadurch gekennzeichnet, dass** die lokale Abkühlung nach dem Biegen ausgeübt wird.

5. Verfahren nach einem der vorstehenden Ansprüche,
**dadurch gekennzeichnet, dass** die Scheibe in dem individuellen Zustand in dem Ofen erhitzt wird.

6. Verfahren nach einem der vorstehenden Ansprüche,
**dadurch gekennzeichnet, dass** die Scheibe in dem individuellen Zustand die lokale Abkühlung erfährt.

7. Verfahren nach einem der vorstehenden Ansprüche,
**dadurch gekennzeichnet, dass** das Biegen durchgeführt wird, nachdem die Scheibe den Ofen verlassen hat.

8. Verfahren nach einem der vorstehenden Ansprüche,
**dadurch gekennzeichnet, dass** die lokale Abkühlung ausgeübt wird, während die Scheibe in einer Umgebung ist, deren Temperatur im Bereich von 5 bis 50 °C liegt.

9. Verfahren nach einem der Ansprüche 1 bis 6,
**dadurch gekennzeichnet, dass** die lokale Abkühlung ausgeübt wird, während die Scheibe in einem Gehäuse ist, dessen Umgebung bei einer Temperatur im Bereich von 400 bis 650 °C liegt und bei einer Temperatur ist, die niedriger als die der Scheibe ist.

10. Verfahren nach einem der vorstehenden Ansprüche,
**dadurch gekennzeichnet, dass** die lokale Abkühlung auf die Scheibe angewendet wird, während diese bei einer Temperatur im Bereich von 530 bis 660 °C und vorzugsweise von 550 bis 610 °C ist.

11. Verfahren nach einem der vorstehenden Ansprüche,
**dadurch gekennzeichnet, dass** die lokale Abkühlung durch Konvektion und/oder Leitung und/oder Strahlung auf die Scheibe angewendet wird.

12. Verfahren nach dem vorstehenden Anspruch,
**dadurch gekennzeichnet, dass** die lokale Abkühlung durch Blasen von Luft durchgeführt wird.

13. Verfahren nach einem der vorstehenden Ansprüche,
**dadurch gekennzeichnet, dass** die Scheibe eine Dicke im Bereich von 0,7 bis 3 mm und insbesondere von 0,8 bis 1,2 mm aufweist.

14. Verfahren nach einem der vorstehenden Ansprüche,
**dadurch gekennzeichnet, dass** die Scheibe nach dem Biegen eine Halbhärtungs- oder Härtungsbehandlung erfährt, wobei ihr eine Oberflächenspannung im Bereich von 20 bis 200 MPa verliehen wird.

15. Verfahren nach einem der vorstehenden Ansprüche,
**dadurch gekennzeichnet, dass** die lokal abgekühlte Zone eine Fläche zwischen 0,5 cm² und 70 cm² bedeckt.

16. Verfahren nach dem vorstehenden Anspruch,
**dadurch gekennzeichnet, dass** die lokal abgekühlte Zone in einem Abstand von dem Rand des Glases liegt, der größer als der einfache Durchmesser der lokal abgekühlten Zone und vorzugsweise größer als der 1,3-fache Durchmesser der lokal abgekühlten Zone ist.

17. Verfahren nach einem der vorstehenden Ansprüche,
**dadurch gekennzeichnet, dass** die lokal abgekühlte Zone in einem Abstand von dem Rand des Glases liegt, der größer als 2 cm ist.

18. Verfahren nach einem der vorstehenden Ansprüche,
**dadurch gekennzeichnet, dass** die lokal abgekühlte Zone eine Fläche von weniger als 10 % und sogar weniger als 5 % der Fläche einer Hauptseite der Glasscheibe bedeckt.

19. Verfahren nach einem der vorstehenden Ansprüche,
**dadurch gekennzeichnet, dass** die lokale Abkühlung in Dauer und Intensität ausreichend ist, damit die Randdruckspannungen nach dem Schnittvorgang in der lokal abgekühlten Zone größer als 4 Mpa und vorzugsweise größer als 8 Mpa sind.

20. Verfahren nach einem der vorstehenden Ansprüche,
**dadurch gekennzeichnet, dass** eine Öffnung in die lokal abgekühlte Zone mindestens teilweise innerhalb des peripheren Druckgurts geschnitten wird, wobei die Öffnung eine Randdruckspannung von mindestens 4 MPa und vorzugsweise mindestens 8 MPa vorweist.

21. Verfahren nach einem der vorstehenden Ansprüche,
**dadurch gekennzeichnet, dass** die Scheibe in dem individuellen Zustand während ihrer Erhitzung und bis zu dem Biegewerkzeug auf einem Rollenbett transportiert wird.

22. Verfahren nach einem der vorstehenden Ansprüche,
**dadurch gekennzeichnet, dass** die Scheibe vor ihrem Schnittvorgang mit einer weiteren Glasscheibe zum Ausbilden einer Verbundverglasung zusammengefügt wird.

23. Verfahren nach dem vorstehenden Anspruch,
**dadurch gekennzeichnet, dass** mehrere Glasscheiben, die durch dasselbe Verfahren erhalten werden, vor dem Schnittvorgang zu einer Verbundverglasung zusammengefügt werden, wobei die lokal abgekühlten Zonen der Glasscheiben einander vor dem Schnittvorgang in der Verbundverglasung gegenüberliegen, dann der Schnittvorgang eine Öffnung durch die gesamte Verbundverglasung erzeugt.

24. Vorrichtung zum Biegen einer individuellen Glasscheibe, umfassend einen peripheren Druckgurt (83), umfassend:
- einen Ofen (3), umfassend Heizelemente zum Erhitzen der Scheibe auf ihre Biegetemperatur,
- ein Biegewerkzeug (4, 6) für die individuelle Glasscheibe, die in dem Ofen (3) auf ihre Biegetemperatur erhitzt wird, das Biegewerkzeug umfassend eine obere Biegeform (4) und eine untere Biegegegenform (6) einer Art eines Pressrahmens, wobei der Pressrahmen (6) zum Pressen der individuellen Glasscheibe, die in dem Ofen (3) auf ihre Biegetemperatur erhitzt wird, gegen die obere Biegeform (4) konfiguriert ist, um eine gebogene individuelle Glasscheibe zu erhalten,
- ein Mittel (2) zum Bewegen der individuellen Scheibe in dem Ofen (3) und bis zu dem Biegewerkzeug (4, 6),
- einen Abkühlungsrahmen (9) zum Aufnehmen der individuellen Glasscheibe nach dem Biegen und zum Überführen der gebogenen individuellen Glasscheibe in eine Abkühlungszone, und
- ein Mittel (8) zum lokalen Abkühlen der individuellen Scheibe nach ihrer Erhitzung durch die Heizelemente des Ofens (3), wobei das Mittel zum lokalen Abkühlen zum Erzeugen einer lokal abgekühlten Zone konfiguriert ist, die sich von der peripheren Zone unterscheidet, die den peripheren Druckgurt (83) umfasst und eine Fläche zwischen 0,5 cm² und 70 cm² bedeckt, wobei die lokal abgekühlte Zone dazu bestimmt ist, in dieser Zone der Scheibe einen Schnittvorgang einer Öffnung (82) durchzuführen, wobei ein Rand erzeugt wird, der eine Randdruckspannung aufweist.

25. Vorrichtung nach dem vorstehenden Anspruch,
**dadurch gekennzeichnet, dass** das Mittel zum lokalen Abkühlen zum Einwirken auf eine Zone der Scheibe vor dem Biegewerkzeug oder während die Scheibe auf oder unter dem Biegewerkzeug ist, konfiguriert ist.

26. Vorrichtung nach einem der vorstehenden Vorrichtungsansprüche,
**dadurch gekennzeichnet, dass** das Biegewerkzeug eine obere Biegeform (4) und einen Pressrahmen (6) umfasst, wobei das Mittel (8) zum lokalen Abkühlen in den Pressrahmen eingebettet ist.

27. Vorrichtung nach einem der vorstehenden Vorrichtungsansprüche,
**dadurch gekennzeichnet, dass** das Biegewerkzeug eine obere Biegeform (4) umfasst, wobei das Mittel (8) zum lokalen Abkühlen in die obere Biegeform eingearbeitet ist.

28. Vorrichtung nach einem der vorstehenden Vorrichtungsansprüche,
**dadurch gekennzeichnet, dass** es einen Abkühlungsrahmen (9) zum Aufnehmen des Glases nach dem Biegen und Überführen davon in eine Abkühlungszone umfasst, wobei das Mittel zum lokalen Abkühlen in den Abkühlungsrahmen eingebettet ist.

29. Vorrichtung nach einem der vorstehenden Vorrichtungsansprüche,
**dadurch gekennzeichnet, dass** das Mittel zum lokalen Abkühlen durch Konvektion und/oder Leitung und/oder Strahlung wirksam ist.

30. Vorrichtung nach dem vorstehenden Anspruch,
**dadurch gekennzeichnet, dass** das Mittel (8) zum lokalen Abkühlen eine Luftblasdüse umfasst.

31. Vorrichtung nach einem der vorstehenden Vorrichtungsansprüche,
**dadurch gekennzeichnet, dass** das Mittel zum Bewegen der Scheibe ein Rollenbett (2) umfasst.

32. Vorrichtung nach einem der vorstehenden Ansprüche,
**dadurch gekennzeichnet, dass** sich das Biegewerkzeug (4, 6) nach dem Ofen (3) befindet.

33. Vorrichtung nach einem der vorstehenden Vorrichtungsansprüche,
**dadurch gekennzeichnet, dass** sie nach dem Biegewerkzeug eine Luftblaseinheit umfasst, die eine Halbhärtung oder eine Härtung auf die Scheibe anwenden kann.

34. Linie zum Herstellen einer gebogenen Verglasung, umfassend eine Glasscheibe, die Linie umfassend die Vorrichtung nach einem der vorstehenden Vorrichtungsansprüche und ein Mittel zum Schneiden der gebogenen Glasscheibe in der lokal abgekühlten Zone.

## Claims

1. A process for manufacturing a bent glazing comprising a glass sheet comprising a peripheral compression belt (83) comprising the preparation of the glass sheet by a process for manufacturing a bent individual glass sheet comprising a peripheral compression belt, comprising the heating thereof to its bending temperature in a furnace (3), the individual bending thereof, and the general cooling thereof, **characterized in that** one zone (84) of the sheet at least partially inside said peripheral compression belt, referred to as locally cooled zone, undergoes, after the heating of the sheet, a local cooling faster than the general cooling, when the sheet is at a temperature of at least 530°C, followed by cutting in the locally cooled zone.

2. The process as claimed in the preceding claim, **characterized in that** the local cooling is applied before the bending.

3. The process as claimed in either of the preceding claims, **characterized in that** the local cooling is applied during the bending.

4. The process as claimed in one of the preceding claims, **characterized in that** the local cooling is applied after the bending.

5. The process as claimed in one of the preceding claims, **characterized in that** the sheet is heated individually in the furnace.

6. The process as claimed in one of the preceding claims, **characterized in that** the sheet undergoes the local cooling individually.

7. The process as claimed in one of the preceding claims, **characterized in that** the bending is carried out after the removal of the sheet from the furnace.

8. The process as claimed in one of the preceding claims, **characterized in that** the local cooling is applied when the sheet is in an environment which has a temperature within the range extending from 5°C to 50°C.

9. The process as claimed in one of claims 1 to 6, **characterized in that** the local cooling is applied when the sheet is in a chamber, the environment of which is at a temperature within the range extending from 400°C to 650°C and is at a temperature is lower than that of the sheet.

10. The process as claimed in one of the preceding claims, **characterized in that** the local cooling is administered on the sheet when the latter is at a temperature within the range extending from 530°C to 660°C and preferably from 550°C to 610°C.

11. The process as claimed in one of the preceding claims, **characterized in that** the local cooling is administered on the sheet by convection and/or conduction and/or radiation.

12. The process as claimed in the preceding claim, **characterized in that** the local cooling is carried out by air blowing.

13. The process as claimed in one of the preceding claims, **characterized in that** the sheet has a thickness within the range extending from 0.7 to 3 mm and more particularly extending from 0.8 to 1.2 mm.

14. The process as claimed in one of the preceding claims, **characterized in that** the sheet undergoes a semi-tempering or tempering treatment after bending, giving it a surface stress within the range extending from 20 to 200 MPa.

15. The process as claimed in one of the preceding claims, **characterized in that** the locally cooled zone covers an area of between 0.5 cm² and 70 cm².

16. The process as claimed in the preceding claim, **characterized in that** the locally cooled zone is at a distance from the edge of the glass of greater than one times the diameter of the locally cooled zone and preferably greater than 1.3 times the diameter of the locally cooled zone.

17. The process as claimed in one of the preceding claims, **characterized in that** the locally cooled zone is at a distance from the edge of the glass of greater than 2 cm.

18. The process as claimed in one of the preceding claims, **characterized in that** the locally cooled zone covers an area of less than 10% and even of less than 5% of the area of a main face of the glass sheet.

19. The process as claimed in one of the preceding claims, **characterized in that** the local cooling is sufficient in duration and intensity so that the edge compressive stresses after cutting in said locally cooled zone are greater than 4 MPa and preferably greater than 8 MPa.

20. The process as claimed in one of the preceding claims, **characterized in that** an orifice is cut in the locally cooled zone at least partially inside the peripheral compression belt, said orifice having an edge compressive stress of at least 4 MPa and preferably of at least 8 MPa.

21. The process as claimed in one of the preceding claims, **characterized in that** the sheet is conveyed individually during the heating thereof and up to the bending tool on a roller bed.

22. The process as claimed in one of the preceding claims, **characterized in that** before being cut, the sheet is assembled with another glass sheet to form laminated glazing.

23. Process according to the preceding claim, **characterized in that** several glass sheets obtained by the same process prior to cutting are assembled to form a laminated glazing, the locally cooled zones of the glass sheets being opposite each other in the laminated glazing prior to cutting, and the cutting then producing an orifice in the entire laminated glazing.

24. A device for bending an individual glass sheet comprising a peripheral compression belt (83) comprising a furnace (3) comprising heating elements for heating the sheet to its bending temperature, a tool (4, 6) for bending the individual glass sheet heated to its bending temperature inside said furnace (3), the bending tool comprising an upper bending form (4) and a lower bending counterform (6) of the pressing frame type, said pressing frame (6) being configured to press said individual glass sheet heated to its bending temperature in said furnace (3) against the upper bending form (4) in order to obtain a bent individual glass sheet, a means for moving the individual sheet through the furnace (3) and to the bending tool (4, 6), a cooling frame (9) for receiving the individual glass sheet after bending and taking said bent individual glass sheet to a cooling zone, and a means (8) for local cooling of the sheet after the heating thereof by the heating elements of the furnace (3), wherein said local cooling means is configured to produce a locally cooled zone distinct from the peripheral zone comprising the peripheral compression belt (83) and covering an area of between 0.5 cm² and 70 cm², said locally cooled zone being intended for the cutting of an orifice (82) in this zone of the sheet producing an edge having an edge compression stress..

25. The device as claimed in the preceding claim, **characterized in that** the means for local cooling is placed in order to intervene over a zone of the sheet before the bending tool or while this sheet is on or under the bending tool.

26. The device as claimed in either one of the preceding device claims, **characterized in that** the bending tool comprises an upper bending form (4) and a pressing frame (6), the means (8) for local cooling being built onto said pressing frame.

27. The device as claimed in one of the preceding device claims, **characterized in that** the bending tool comprises an upper bending form (4), the means (8) for local cooling being incorporated into said upper bending form.

28. The device as claimed in one of the preceding device claims, **characterized in that** it comprises a cooling frame (9) for receiving the glass after bending and taking it to a cooling zone, the means for local cooling being integrated on said cooling frame.

29. The device as claimed in one of the preceding device claims, **characterized in that** the means for local cooling acts by convection and/or conduction and/or radiation.

30. The device as claimed in the preceding claim, **characterized in that** the means for local cooling (8) comprises an air blowing nozzle.

31. The device as claimed in one of the preceding device claims, **characterized in that** the means for moving the sheet comprises a roller bed (2).

32. The device as claimed in one of the preceding device claims, **characterized in that** the bending tool (4, 6) is located after the furnace (3).

33. The device as claimed in one of the preceding device claims, **characterized in that** it comprises, after the bending tool, and air blowing unit that can administer a semi-tempering or a tempering to the sheet.

34. A line for manufacturing a bent glazing comprising a glass sheet, said line comprising the device from one of the preceding device claims and a means for cutting the bent glass sheet in the locally cooled zone.
